# EUROPEAN PATENT APPLICATION

(11) **EP 4 439 810 A1**
(43) Date of publication of application: **02.10.2024**
(21) Application number: 24151886.9
(22) Date of filing: 15.01.2024
(51) Int. Cl.: H01M 50/121, H01M 50/209, H01M 50/512, H01M 50/516, H01M 50/522, H01M 50/547, H01M 50/557, H01M 50/103, H01M 50/224

(54) **BATTERY MODULE**

(30) Priority: 29.03.2023 JP 2023052842
(71) Applicant: Prime Planet Energy & Solutions, Inc., Chuo-ku Tokyo 103-0022 (JP)
(72) Inventor: UCHIDA, Yozo, Tokyo, 103-0022 (JP)
(74) Representative: Kuhnen & Wacker Patent- und Rechtsanwaltsbüro PartG mbB

(57) **Abstract**

A battery module (1) includes a plurality of batteries (10) each including: an electrode body; a non-aqueous electrolyte; a battery case made of a liquid-junction preventing resin film including no metal foil and accommodating and hermetically sealing the electrode body and the electrolyte to block penetration of the electrolyte; and a plurality of electrode terminal plates (17A, 17B, 18A, 18B) which include at least one positive terminal plate (17A, 17B) and at least one negative terminal plate (18A, 18B), each hermetically extending from inside to outside of the battery case through a peripheral portion of the battery case, the electrode terminal plate (17A, 18A) of one of the batteries (10) that are adjacently located being electrically connected to the electrode terminal plate (17B, 18B) of the other battery (10); and a module container (2) made of metal, housing and hermetically sealing the batteries (10).

## Description

### BACKGROUND

### Technical field

The present invention relates to a battery module in which a plurality of electrodes is housed.

### Related Art

Patent document 1 discloses a laminate-type battery module configured such that two or more laminate batteries are stacked one on another and housed in an exterior case (for example, see FIG. 4 of Patent document 1).

### Patent Documents

Patent Document 1: Japanese unexamined patent application publication No. 2022-169135 (JP 2022-169135A)

### SUMMARY

### Technical Problems

In this laminate battery module, an outer package of each laminate battery is an expensive laminate film consisting of a metal foil such as an aluminum foil and resin layers, which are laminated one on another, in order to prevent permeation of organic solvents and others that form the electrolyte and further prevent permeation and intrusion of water or moisture into the laminate battery. In addition, the laminate batteries are hermetically housed in a metal case used as the exterior case. This configuration results in excessive quality for preventing moisture intrusion, and in high costs.

The present invention has been made to address the above problems and has a purpose to provide an inexpensive battery module in which a plurality of batteries is housed.

### Means of Solving the Problems

(1) To achieve the above-mentioned purpose, one aspect of the present invention provides a battery module comprising: a plurality of batteries each including: an electrode body; a non-aqueous electrolyte; a battery case made of a liquid-junction preventing film that does not include a metal foil, the battery case accommodating and hermetically sealing the electrode body and the non-aqueous electrolyte to block penetration of the non-aqueous electrolyte; and a plurality of electrode terminal plates including at least one positive terminal plate and at least one negative terminal plate, each hermetically extending from inside to outside of the battery case through a peripheral portion of the battery case, the electrode terminal plate of one of the batteries that are adjacently located being electrically connected to the electrode terminal plate of the other battery; and a module container made of metal, housing and hermetically sealing the plurality of batteries.

In each battery of this battery module, the electrode body and the non-aqueous electrolyte are accommodated and hermetically sealed in the battery case made of the liquid-junction preventing resin film. This can prevent the electrolyte from leaking or penetrating through the battery case to seep out, causing the batteries to short-circuit via the non-aqueous electrolyte, i.e., ionically short-circuit, with each other. However, unlike a so-called laminate film, the liquid-junction preventing resin film that forms the battery case is inexpensive, but does not include a metal foil which prevents penetration of water vapor or the like, and thus cannot sufficiently prevent water vapor from penetrating and intruding from outside to inside of the battery. In this battery module, however, the metal module container houses and hermetically seals the plurality of batteries and thus water or water vapor is prevented from intruding into the metal module container, i.e., into the space around the batteries. Accordingly, even though the battery case made of an inexpensive liquid-junction preventing resin film, not a laminate film, is used as the outer package, an inexpensive battery module with the metal module container capable of preventing intrusion of water vapor into the batteries can be achieved.

The batteries may include secondary batteries, such as lithium-ion secondary batteries and sodium-ion rechargeable batteries.

The non-aqueous electrolyte may be a non-aqueous electrolyte obtained by dissolving electrolytic salt in organic solvent. The organic solvent may include for example cyclic carbonate esters, such as propylene carbonate and ethylene carbonate, and chain carbonates, such as dimethyl carbonate, diethyl carbonate and ethyl methyl carbonate.

The liquid-junction preventing resin film used as the battery case is a film made of resin capable of preventing penetration of the electrolyte, and may be for example a resin film made of PT, PET, PP, PE, olefin-based resin or a multilayer film consisting of multiple resin layers made of PP/PET or others.

The batteries each having multiple electrode terminal plates may include a battery provided with one pair of positive and negative terminal plates and further a battery provided with two or more sets of paired positive and negative terminal plates.

The forms of the battery module may include, for example, the form that flat plate-like batteries are arranged in a straight line in a plane direction and connected to each other, and housed in a metal module container, the form that flat plate-like batteries are arranged in a vertical and horizontal lattice pattern in a plane direction and connected to each other, and housed in a metal module container, and the form that two or more flat plate-like batteries are stacked and connected to each other, and housed in a metal module container. Also, multiple batteries may be connected in parallel to each other, in series to each other, or in series-parallel to each other.

(2) In the battery module described in (1), the electrode terminal plates of the batteries are directly welded to each other.

In this battery module, the electrode terminal plates of the batteries are connected directly to each other, not via busbars or the like separately prepared. Thus, the battery module can have the reduced number of components, a simple structure, and low costs.

The method for directly welding the electrode terminal plates to each other may be selected from resistant welding, laser welding, ultrasonic welding, and so on.

(3) In the battery module described in (2), the positive terminal plate is formed of an aluminum plate, the negative terminal plate is formed of a copper plate, and the positive terminal plate of the one battery and the negative terminal plate of the other battery are directly connected to each other by ultrasonic welding.

When an aluminum plate and a copper plate, which are dissimilar metals, are connected by melting respective base metals using e.g. spot welding, brittle intermetallic compounds may be generated in their melted areas, causing fracture at welded portions.

In contrast, as described above, when the aluminum plate and the copper plate are connected by the ultrasonic welding, the aluminum plate and the copper plate are solid-phase bonded to each other, so that any intermetallic compounds are less likely to form between those plates, resulting in stable connection between those plates.

(4) In the battery module described in any one of (1) to (3), each of the plurality of batteries has four terminal plates including: a pair of first positive terminal plate and first negative terminal plate; and a pair of second positive terminal plate and second negative terminal plate, and the plurality of batteries is connected in parallel with each other in a cascade arrangement, in which the first positive terminal plate of the one battery is connected to the second positive terminal plate of the other battery and the first negative terminal plate of the one battery is connected to the second negative terminal plate of the other battery.

In this battery module, the first positive terminal plate of one of the adjacently-located batteries is connected to the second positive terminal plate of the other battery, while the first negative terminal plate of the one battery to the second negative terminal plate of the other battery, so that the contained batteries are connected in a cascade arrangement. This configuration can achieve a battery module in which the contained batteries are easily connected to each other in parallel.

(5) Alternatively, in the battery module described in any one of (1) to (3), the plurality of batteries are directly connected to each other by connection of the at least one positive terminal plate of the one battery to the at least one negative terminal plate of the other battery.

In this battery module, the positive terminal plate of one of the adjacently-located batteries is connected to the negative terminal plate of the other battery, so that the contained batteries are connected in series to each other. This configuration can achieve an inexpensive battery module with a simple structure.

In the configuration that the positive terminal plates of one of the adjacent batteries are connected, one-to-one, to the negative terminal plates of the other battery, the batteries can be connected with low resistance and in series to each other.

Moreover, the battery may be configured such that the electrode body and the electrolyte are enclosed and sealed in the liquid-junction preventing resin film that blocks passage of the electrolyte, and the battery includes a pair of first positive and negative terminal plates and a pair of second positive and negative terminal plates, each extending from inside to outside of the battery case through a peripheral portion of the battery case.

This battery includes two sets of paired positive and negative terminal plates. Thus, the batteries can be easily connected to each other in a cascade arrangement by connecting the first positive terminal plate of one of the adjacently-located batteries to the second positive terminal plate of the other battery, while connecting the first negative terminal plate of the one battery to the second negative terminal plate of the other battery. This configuration can easily achieve a battery module in which the batteries are connected in parallel to each other. In addition, the battery case is formed of an inexpensive liquid-junction preventing resin film as compared to the laminate film, so that the battery itself can be inexpensive.

### BRIEF DESCRIPTION OF THE DRAWINGS

FIG. 1 is an explanatory diagram showing an internal structure of a battery module in a first embodiment;
FIG. 2 is a plan view of a 4-terminal battery in the first embodiment;
FIG. 3 is a partial enlarged cross-sectional view of the structure of a terminal part of the 4-terminal battery in the first embodiment;
FIG. 4 is an exploded view of a positive electrode sheet to be used for the 4-terminal battery in the first embodiment and a first modified embodiment;
FIG. 5 is an exploded view of a negative electrode sheet to be used for the 4-terminal battery in the first embodiment and the first modified embodiment;
FIG. 6 is a flowchart showing the process of producing the battery module in the first embodiment;
FIG. 7 is a plan view showing a battery group in which the 4-terminal batteries are connected to one another in the first embodiment;
FIG. 8 is a perspective view of a terminal-equipped wall member of the battery module in the first embodiment;
FIG. 9 is a perspective view of a bottom-side plate member of the battery module in the first embodiment;
FIG. 10 is a perspective view of a container body in the first embodiment;
FIG. 11 is a plan view showing a state in which a plurality of 4-terminal batteries interconnected is housed in the container body in the first embodiment;
FIG. 12 is a plan view of the battery module in the first embodiment;
FIG. 13 is a plan view of a 4-terminal battery in the first modified embodiment;
FIG. 14 is an explanatory diagram showing an internal structure of a battery module in the first modified embodiment;
FIG. 15 is an explanatory diagram showing an internal structure of a battery module in a second modified embodiment;
FIG. 16 is an explanatory diagram showing an internal structure of a battery module in a third modified embodiment;
FIG. 17 is an explanatory diagram showing an internal structure of a battery module in a second embodiment; and
FIG. 18 is a plan view of a 2-terminal battery in the second embodiment.

### DETAILED DESCRIPTION OF THE EXEMPLARY EMBODIMENTS

### First Embodiment

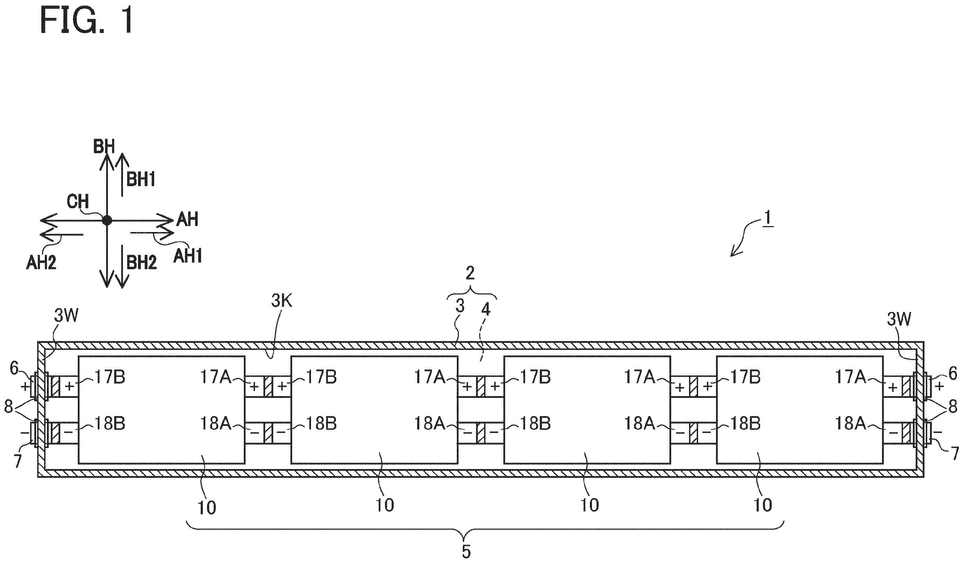

In a first embodiment of the invention, a 4-terminal battery 10 (hereinafter, also simply referred to as a battery) and a battery module 1 housing a battery group 5 consisting of multiple (four in the first embodiment) batteries 10 connected to one another will now be described in detail, referring to FIGs. 1 to 12. Each battery 10 is a sealed lithium-ion secondary battery having a general rectangular prismatic shape. The battery module 1 will be mounted in vehicles, such as hybrid cars, plug-in hybrid cars, and electric cars, and various devices, such as drones.

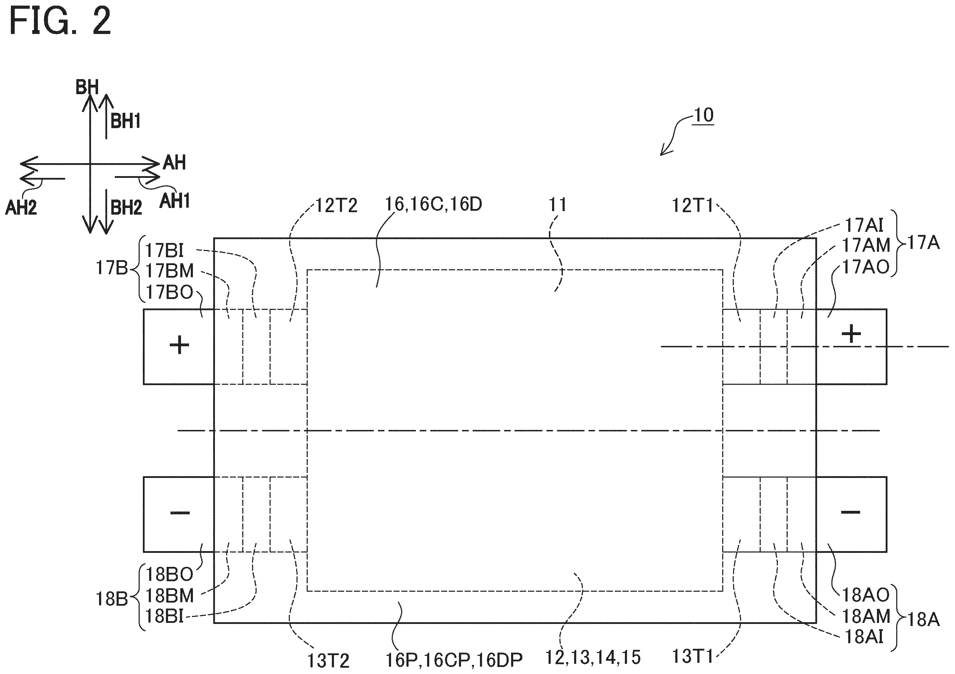

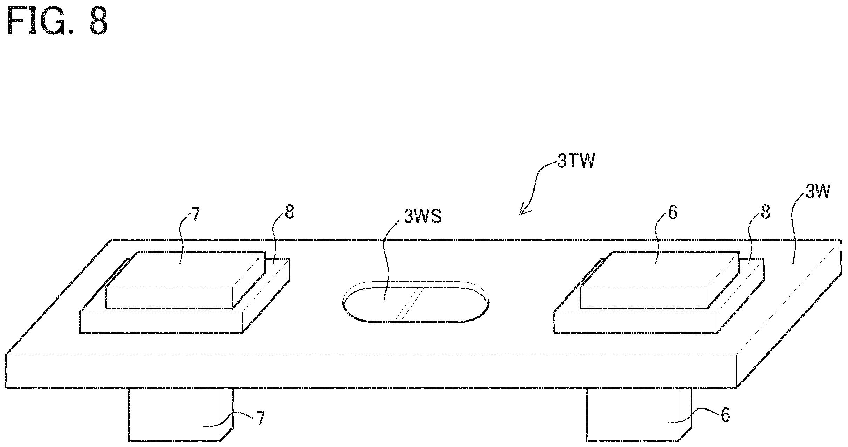

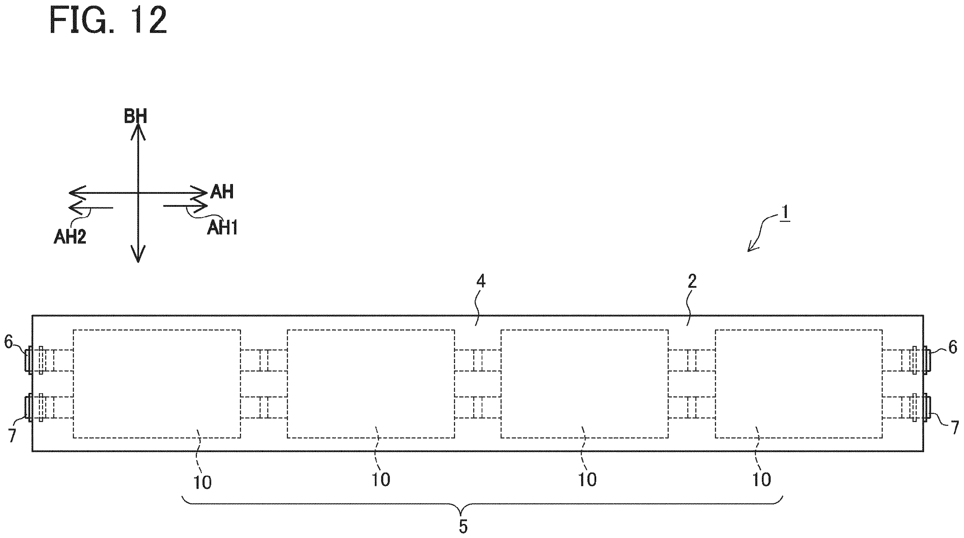

The battery module 1 (see FIGs. 1 and 12) in the first embodiment is provided with the battery group 5, a module container 2 in which the battery group 5 is housed and hermetically sealed, and two pairs of positive terminal members 6 and negative terminal members 7, that is, four terminal members in total (each pair consisting one positive terminal member 6 and one negative terminal member 7), fixedly provided in the module container 2 via insulation members 8. Each insulation member 8 insulates between the positive terminal member 6 or the negative terminal member 7 and the module container 2 (see FIG. 8). In the battery module 1 in the first embodiment, four batteries 10 contained therein are connected in parallel to each other. In this description, the length direction AH, the width direction BH, and the thickness direction CH of the battery module 1, the batteries 10, and others, are defined as indicated in each of FIG. 1, FIG. 2, and other figures.

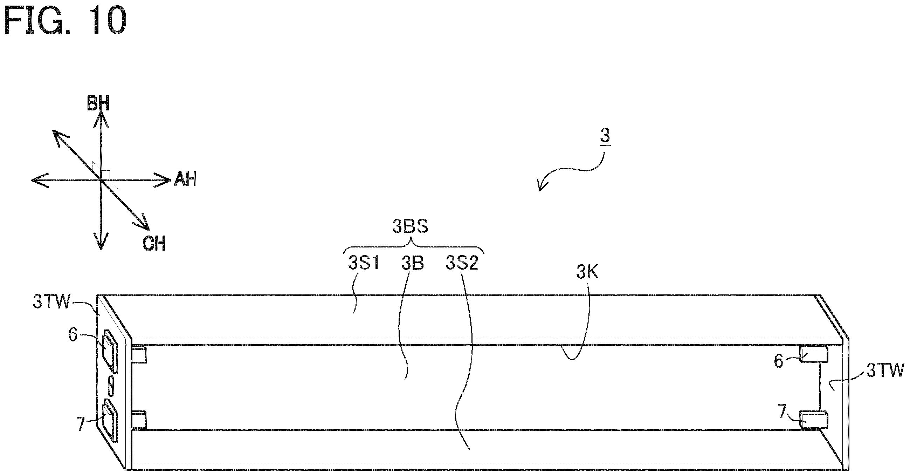

The module container 2 is made of metal, which is aluminum in the embodiment, and has a rectangular box-like shape elongated in the length direction AH. This module container 2 includes a container body 3 (see FIG. 10) having a bottomed rectangular tubular, or prismatic, shape with a rectangular opening 3K, which is long in the length direction AH, and a lid member 4 (see FIG. 12) having a rectangular flat plate-like shape extending long in the length direction AH and closing the opening 3K of the container body 3. The container body 3 includes a pair of wall members 3W located on one side AH1 and the other side AH2 in the length direction AH. In each of the wall members 3W (see FIG. 8), the positive terminal member 6 and the negative terminal member 7 penetrating through the corresponding wall member 3W are fixedly provided via the insulation members 8.

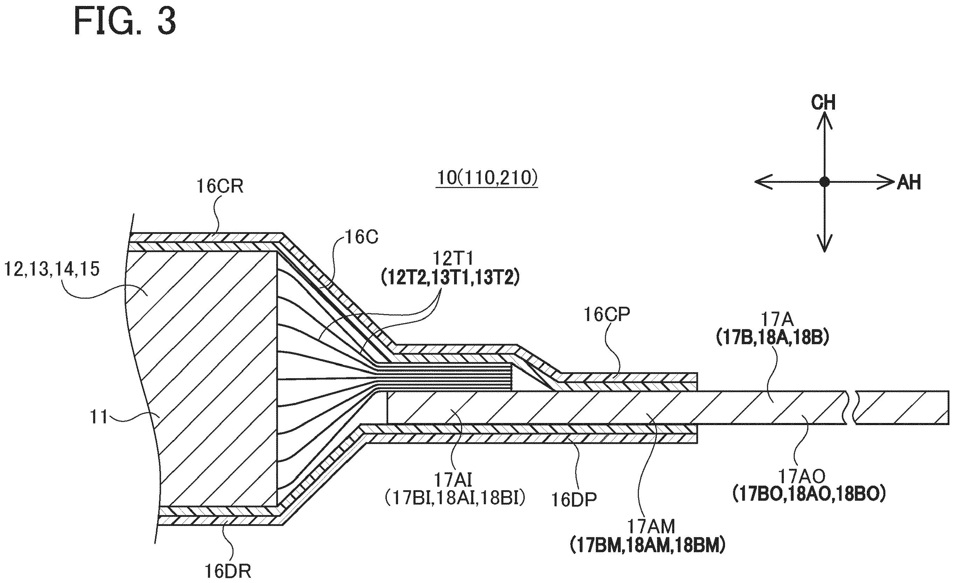

The 4-terminal batteries 10 (see FIGs. 2 and 3) constituting the battery group 5 in the first embodiment each have a general rectangular prismatic shape and include a pair of first positive terminal plate 17A and first negative terminal plate 18A, each protruding to the one side AH1 in the length direction AH (rightward in FIG. 2) and also a pair of second positive terminal plate 17B and second negative terminal plate 18B, each protruding to the other side AH2 (leftward in FIG. 2). More specifically, in each of the batteries 10, the first positive terminal plate 17A and the second positive terminal plate 17B (hereinafter, they are also collectively referred to as positive terminal plates 17A, 17B) are placed on one side BH1 in the width direction BH, i.e., on the upper side in FIG. 2. In contrast, the first negative terminal plate 18A and the second negative terminal plate 18B (hereinafter, they are also collectively referred to as negative terminal plates 18A, 18B) are placed on the other side BH2 in the width direction BH, i.e., on the lower side in FIG. 2.

This battery 10 contains an electrode body 11 and an electrolyte 15 in a battery case 16 formed of a liquid-junction preventing resin film. In addition, the battery 10 has two pairs of terminal plates; a pair of the positive terminal plate 17A and the negative terminal plate 18A and a pair of the positive terminal plate 17B and the negative terminal plate 18B, i.e., four terminal plates in total, each hermetically extending out of the battery case 16 in the form protruding from the inside of the battery case 16 in the length direction AH through a peripheral portion 16P of the battery case 16, specifically, through a peripheral portion 16CP of a battery case member 16C and a peripheral portion 16DP of a battery case member 16D. Further, a part of the electrolyte 15 contained in the battery case 16 is impregnated in the electrode body 11 and the rest accumulates in the space of the battery case 16, outside the electrode body 11.

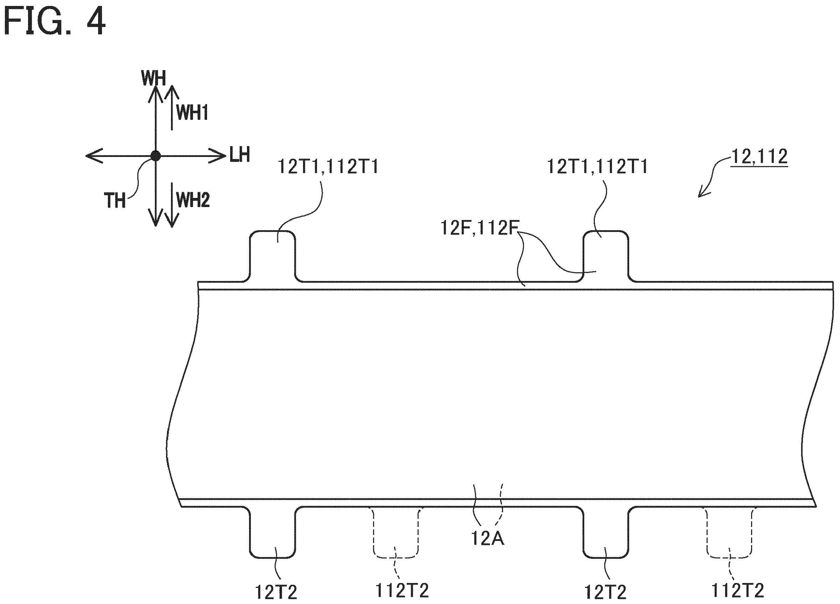

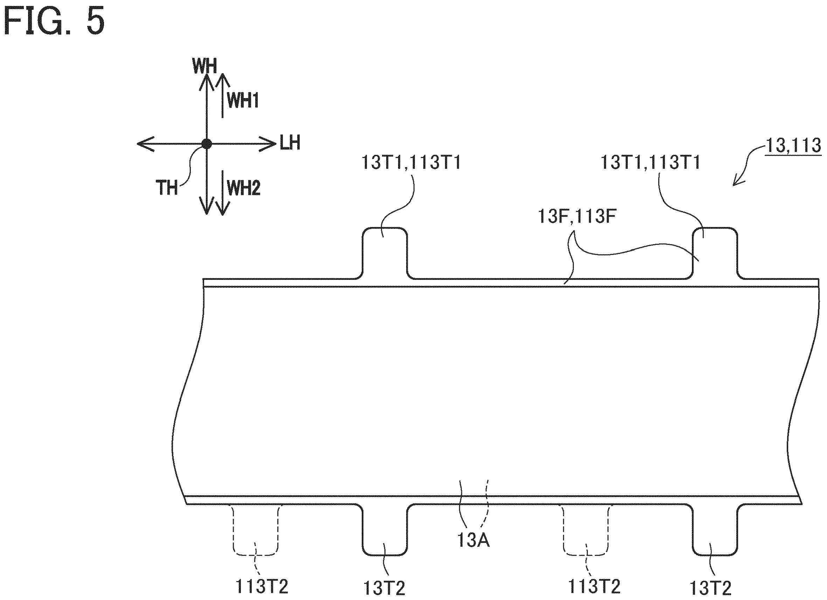

The electrode body 11 housed in the battery case 16 is a so-called flat wound electrode body, which is made by winding a strip-shaped positive electrode sheet 12 extending in the longitudinal direction LH as shown in FIG. 4 and a strip-shaped negative electrode sheet 13 extending in the longitudinal direction LH as shown in FIG. 5 around the axis 11AX with paired strip-shaped separators 14 are alternately interposed therebetween, and pressing this would assembly flat in a direction perpendicular to the drawing paper of FIG. 1. This electrode body 11 is accommodated in the battery case 16 in such an orientation that the axis 11AX extends along the length direction AH of the battery 10 (see FIG. 2). In this description, the longitudinal direction LH, the width direction WH, and the thickness direction TH of the positive electrode sheet 12, the negative electrode sheet 13, and others are defined as indicated by arrows in FIGs. 4 and 5. In the first embodiment and other examples, the electrode body 11 is a flat wound electrode body, but may be a laminated electrode body.

The strip-shaped positive electrode sheet 12 of the electrode body 11 is provided with a strip-shaped positive current collecting foil 12F formed of an aluminum foil and strip-shaped positive active material layers 12A laminated on both surfaces of the positive current collecting foil 12F (see FIG. 4). The positive active material layers 12A are made of positive active material particles, conductive particles, and a binder, which are not shown. In the first embodiment, the positive active material particles are lithium transition metal composite oxide particles, specifically, for example, lithium nickel cobalt manganese composite oxide particles, the conductive particles are for example acetylene black (AB), and the binder is for example polyvinylidene fluoride (PVDF).

The positive current collecting foil 12F of the strip-shaped positive electrode sheet 12 includes, on one side WH1 and the other side WH2 (the upper side and the lower side in FIG. 4) in the width direction WH relative to the positive active material layers 12A, one-side positive electrode tabs 12T1 and other-side positive electrode tabs 12T2, which protrude respectively to the one side WH1 and the other side WH2 in the width direction WH and which are arranged respectively on the one side WH1 and the other side WH2 at intervals in the longitudinal direction LH. On these one-side positive electrode tabs 12T1 and other-side positive electrode tabs 12T2, the positive active material layers 12A are absent. The electrode body 11 is made by winding the positive electrode sheet 12 and the negative electrode sheet 13 and flattening this wound body so that the one-side positive electrode tabs 12T1 are placed overlapping one another, and thus the overlapping one-side positive electrode tabs 12T1 are integrated and connected to an internal connecting portion 17AI of the first positive terminal plate 17A made of aluminum as described later (see FIGs. 2 and 3). Similarly, in the form of the electrode body 11, the other-side positive electrode tabs 12T2 are also placed overlapping one another, and thus they are integrated and connected to an internal connecting portion 17BI of the second positive terminal plate 17B.

On the other hand, the strip-shaped negative electrode sheet 13 is provided with a strip-shaped negative current collecting foil 13F formed of a copper foil and strip-shaped negative active material layers 13A laminated on both surfaces of the negative current collecting foil 13F (see FIG. 5). The negative active material layers 13A are made of negative active material particles and a binder, which are not shown. In the first embodiment, the negative active material particles are graphite particles, and the binder is for example carboxymethyl cellulose (CMC).

The negative current collecting foil 13F of the negative electrode sheet 13 includes, on one side WH1 and the other side WH2 (the upper side and the lower side in FIG. 5) in the width direction WH relative to the negative active material layers 13A, one-side negative electrode tabs 13T1 and other-side negative electrode tabs 13T2, which protrude respectively to the one side WH1 and the other side WH2 in the width direction WH and which are arranged respectively on the one side WH1 and the other side WH2 at intervals in the longitudinal direction LH. On these one-side negative electrode tabs 13T1 and other-side negative electrode tabs 13T2, the negative active material layers 13A are absent. The electrode body 11 is made by winding the positive electrode sheet 12 and the negative electrode sheet 13 and flattening this wound body so that the one-side negative electrode tabs 13T1 are placed overlapping one another, and thus the overlapping one-side negative electrode tabs 13T1 are integrated and connected to an internal connecting portion 18AI of the first negative terminal plate 18A made of copper as described later (see FIGs. 2 and 3). Similarly, in the form of the electrode body 11, the other-side negative electrode tabs 13T2 are also placed overlapping one another, and thus they are integrated and connected to an internal connecting portion 18BI of the second negative terminal plate 18B.

The paired separators 14 may be each formed of a porous resin sheet made of, for example, polyolefin resin, such as polyethylene (PE) and polypropylene (PP). This embodiment adopts a three-layer PE/PP/PE separator. Another separator additionally including a heat-resistant layer containing inorganic filler provided on the surface of each separator 14 may also be adopted. The inorganic filler may be selected from alumina, boehmite, aluminum hydroxide, titania, and so on.

The positive terminal plates 17A and 17B are each made of aluminum in an elongated plate shape. The internal connecting portions 17AI and 17BI which respectively form one-end portions of the positive terminal plates 17A and 17B are each connected to the integrated one-side positive electrode tabs 12T1 or the integrated other-side positive electrode tabs 12T2 of the positive electrode sheet 12 constituting the electrode body 11. In contrast, external terminal portions 17AO and 17BO, which respectively form the other-end portions of the positive terminal plates 17A and 17B, extend out of the battery case 16.

On the other hand, the negative terminal plates 18A and 18B are each made of copper in an elongated plate shape similar to the positive terminal plates 17A and 17B. The internal connecting portions 18AI and 18BI which respectively form one-end portions of the negative terminal plates 18A and 18B are each connected to the integrated one-side negative electrode tab 13T1 or the integrated other-side negative electrode tab 13T2 of the negative electrode sheet 13 constituting the electrode body 11. In contrast, external terminal portions 18AO and 18BO, which respectively form the other-end portions of the negative terminal plates 18A and 18B, extend out of the battery case 16.

The electrolyte 15 is a non-aqueous electrolyte in which supporting salt is dissolved in a non-aqueous solvent. Examples of this non-aqueous solve may include carbonate solvents, such as ethylene carbonate, dimethyl carbonate, and ethyl methyl carbonate. In the embodiment and others, an organic solvent is used, which is prepared by mixing ethylene carbonate, ethyl methyl carbonate, and dimethyl carbonate at the weight ratio of 3:3:4. As the supporting salt, LiPF₆ is used.

The battery case 16 consists of a pair of battery case members 16C and 16D, each formed from a liquid-junction preventing resin film in advance into a rectangular shape in plan view to be one size larger than the electrode body 11 to be housed therein, and overlapped each other, as shown in FIG. 2. In the first embodiment, a two-layer PP/PET film is used as the liquid-junction preventing resin film, with the PP side located on the inner side. These battery case members 16C and 16D respectively include recessed accommodating portions 16CR and 16DR for accommodating the electrode body 11 and flat rectangular ring-shaped peripheral portions 16CP and 16DP formed all around the corresponding accommodating portion 16CR or 16DR (see FIG. 3).

The peripheral portions 16CP and 16DP are stacked one on the other and hermetically thermally-fused to form a flat rectangular ring-shaped peripheral portion 16P of the battery case 16, in the arrangement that the electrode body 11 is accommodated between the accommodating portions 16CR and 16DR of the paired battery case members 16C and 16D with the external terminal portions 17AO and 17BO of the positive terminal plates 17A and 17B and the external terminal portion 18AO and 18BO of the negative terminal plates 18A and 18B being drawn out of the battery case 16.

For the positive terminal plates 17A and 17B and the negative terminal plates 18A and 18B, a middle portion 17AM between the internal connecting portion 17AI and the external terminal portion 17AO, a middle portion 17BM between the internal connecting portion 17BI and the external terminal portion 17BO, a middle portion 18AM between the internal connecting portion 18AI and the external terminal portion 18AO, and a middle portion 18BM between the internal connecting portion 18BI and the external terminal portion 18BO are each sandwiched between the peripheral portions 16CP and 16DP of the battery case 16 and hermetically thermally-fused together. To enhance the bonding strength between the middle portions 17AM, 17BM, 18AM, and 18BM and the peripheral portions 16CP and 16DP, the middle portions 17AM and 18AM may be surface-roughened or a resin layer made of PP which has a good metal-bonding property with respect to the middle portions 17AM and others may be interposed between each of the middle portions 17AM, 17BM, 18AM, and 18BM and the peripheral portions 16CP and 16DP.

Each battery 10 in the first embodiment is configured such that the electrode body 11 and the electrolyte 15 are accommodated and hermetically sealed in the battery case 16 made of the liquid-junction preventing resin film. This configuration can prevent the electrolyte 15 from leaking out or penetrating through the battery case 16 to seep out, thus causing liquid junction (ionic short circuit) where the batteries 10 are short-circuited via the electrolyte 15. In addition, the battery case 16 is formed of the liquid-junction preventing resin film less expensive as compared to a laminate film containing a metal foil, such as an aluminum foil, so that the batteries 10 can be inexpensive and hence the battery module 1 using those batteries 10 can also be inexpensive.

The liquid-junction preventing resin film is inexpensive, but unlike the laminate film, the liquid-junction preventing resin film does not contain a metal foil such as an aluminum foil to prevent penetration of gasses, such as water vapor, and thus cannot sufficiently prevent water vapor from permeating and intruding from the outside to the inside of a battery via the battery case 16.

In the battery module 1 in the first embodiment, however, the module container 2 made of metal, such as aluminum, houses and hermetically seals a plurality of batteries 10 forming the battery group 5. Thus, this battery module 1 originally prevents intrusion of water or water vapor into the module container 2, that is, prevents intrusion of water or water vapor to the space around the batteries 10. It is therefore possible to prevent intrusion of water vapor into each battery 10 even using the battery case 16 made of the inexpensive liquid-junction preventing resin film as the exterior package of each battery 10, and hence make the battery module 1 less expensive.

In the first embodiment, the 4-terminal batteries 10 described above are interconnected to constitute the battery group 5 (see FIG. 1). More specifically, for example, the first positive terminal plate 17A of the leftmost battery 10 in FIG. 1 is directly welded by laser welding to the second positive terminal plate 17B of the second battery 10 from the left in FIG. 1. Also, the first negative terminal plate 18A of the leftmost battery 10 is directly welded by laser welding to the second negative terminal plate 18B of the second battery 10 from the left. In this way, multiple (four in the embodiment) batteries 10 are connected in parallel in a cascade arrangement. Furthermore, of the batteries 10 located on both ends of the battery group 5, the terminal plates located on both ends and unconnected to another battery 10 are directly welded by laser welding to the positive terminal members 6 or the negative terminal members 7 provided in the module container 2. In other words, for the leftmost battery 10 in FIG. 1, the second positive terminal plate 17B is directly welded to the positive terminal member 6 and the second negative terminal plate 18B is directly welded to the negative terminal member 7 in the module container 2 on the other side AH2 in the length direction AH. For the rightmost battery 10 in FIG. 1, the first positive terminal plate 17A is also directly welded to the positive terminal member 6 and the first negative terminal plate 18A is directly welded to the negative terminal member 7 in the module container 2 on the one side AH1 in the length direction AH.

In the above manner, the 4-terminal batteries 10 in the first embodiment can be easily connected to each other in a cascade arrangement. Accordingly, the battery module 1 can be achieved in which the 4-terminal batteries 10 contained therein are interconnected easily and connected in parallel to each other.

In the first embodiment, additionally, the terminal plates of the 4-terminal batteries 10 are directly connected to each other without using any internal connection members, such as busbars, so that the number of components can be reduced, resulting in a simply-configured, inexpensive battery module 1.

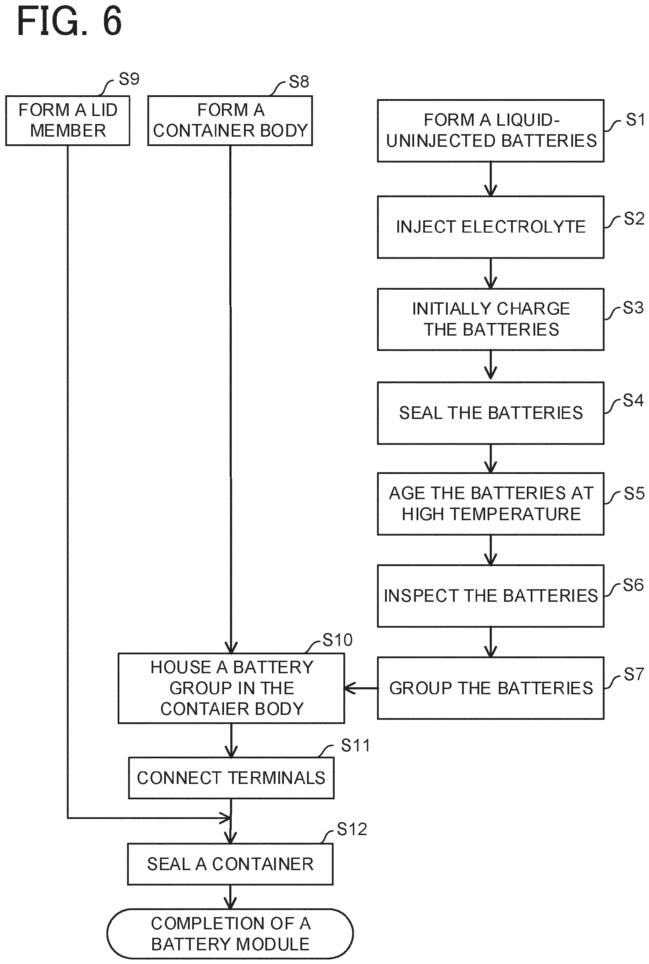

Manufacturing of the batteries 10 and the battery module 1 in the first embodiment will be described below, referring to a flowchart of FIG. 6 and others. In an electrolyte-uninjected-battery forming step S1 of forming a battery that is not injected with electrolyte, the positive electrode sheet 12, the negative electrode sheet 13, and the separators 14 are wound and flattened to form the electrode body 11. Specifically, this electrode body 11 is accommodated in the battery case member 16D and connected to the positive terminal plates 17A and 17B and the negative terminal plates 18A and 18B. The battery case member 16C is stacked on the battery case member 16D, and the peripheral portions 16CP and 16DP are thermally welded to each other. Thus, a battery 10 uninjected with the electrolyte 15 is produced, which is also referred to as a liquid-uninjected battery 10. For each of the liquid -uninjected batteries 10, a part of the peripheral portion 16P of the battery case 16 (e.g., a portion between the first positive terminal plate 17A and the first negative terminal plate 18A and a portion between the second positive terminal plate 17B and the second negative terminal plate 18B) is left unsealed to allow injection of the electrolyte 15 into the battery case 16 through the unsealed part (not shown) of the peripheral portion 16P in an injecting step S2 described below.

In the injecting step S2, as described above, the electrolyte 15 is injected into the battery case 16 through the unsealed part of the peripheral portion 16P of the battery case 16. Thus, the electrolyte 15 is impregnated in the electrode body 11.

Subsequently, in an initial charging step S3, each battery 10 is subjected to initial charging under the conditions of 0.5 C - CCCV charge (90% SOC) at room temperatures. Then, in a sealing step S4, the unsealed part of the peripheral portion 16P of each battery case 16 is sealed, hermetically sealing each battery 10.

In a high-temperature aging step S5, further, the batteries 10 are left to stand in an environment of 60C° for 20 hours. In an inspecting step S6, subsequently, the batteries 10 are subjected to inspections for e.g. short circuits and other defects to complete the batteries10.

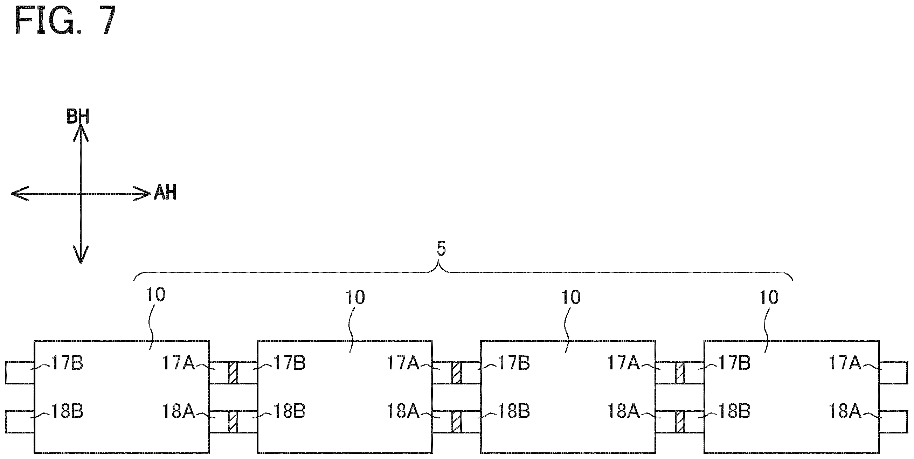

In a battery grouping step S7, multiple completed batteries 10 (i.e., four batteries 10 in the first embodiment) are arranged such that the first positive terminal plate 17A of one of the batteries 10 located adjacently, i.e., one of two adjacent batteries 10, is directly connected by laser welding to the second positive terminal plate 17B of the other battery 10, while the first negative terminal plate 18A of the one battery 10 is directly connected by laser welding to the second negative terminal plate 18B of the other battery 10, so that the batteries 10 are connected in parallel in the cascade arrangement. In this way, the battery group 5 shown in FIG. 7 is formed.

Meanwhile, in parallel with the manufacture of the batteries 10 and the battery group 5, a container body forming step S8 is performed to form the container body 3 (see FIG. 10). Specifically, as shown in FIG. 8, a wall member 3W is punched out of an aluminum plate (not shown) and formed with a safety valve portion 3WS and through holes (not shown) for insertion of the positive terminal member 6 and the negative terminal member 7. Next, the positive terminal member 6 and the negative terminal member 7, which are produced separately in advance, are inserted in place in the corresponding through holes, and then an insulation member 8 is formed of insulating resin (e.g., PPS, polyamide) by injection molding. In this way, a terminal-equipped wall member 3TW is produced in which the positive terminal member 6 and the negative terminal member 7 are fixed to the wall member 3W while the insulation members 8 each insulate between the positive terminal member 6 and the wall member 3W or between the negative terminal member 7 and the wall member 3W.

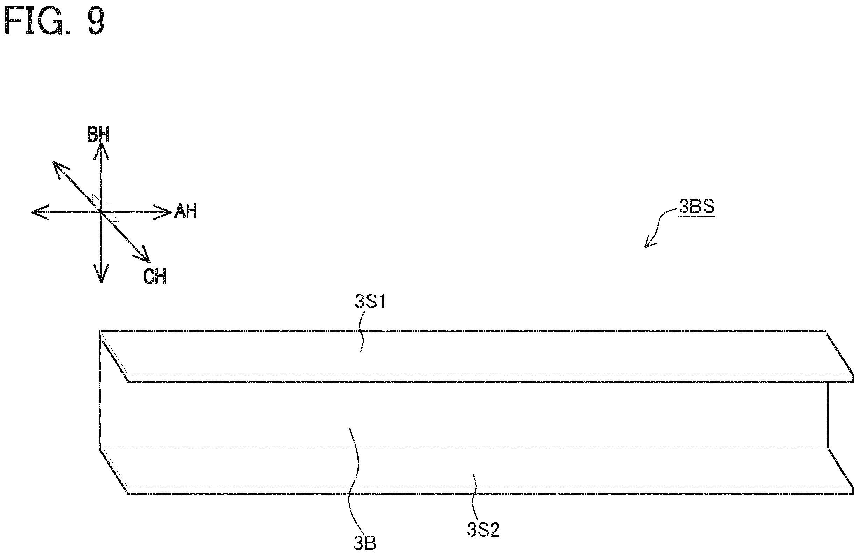

Further, as shown in FIG. 9, a bottom-side plate member 3BS is formed separately in advance by bending an aluminum plate (not shown) to form a rectangular bottom portion 3B extending in the length direction AH and rectangular long side portions 3S1 and 3S2 each standing in the thickness direction CH from both sides of the bottom portion 3B in the width direction BH and each extending in the length direction AH.

As shown in FIG. 10, the terminal-equipped wall members 3TW are each welded to the end portions of the bottom-side plate member 3BS on both ends in the length direction AH, forming the container body 3 having a bottomed rectangular prismatic shape with a rectangular opening 3K long in the length direction AH.

In a lid member forming step S9, the rectangular flat lid member 4, which is long in the length direction AH, is formed in advance in parallel with the production of the container body 3 (see FIG. 12).

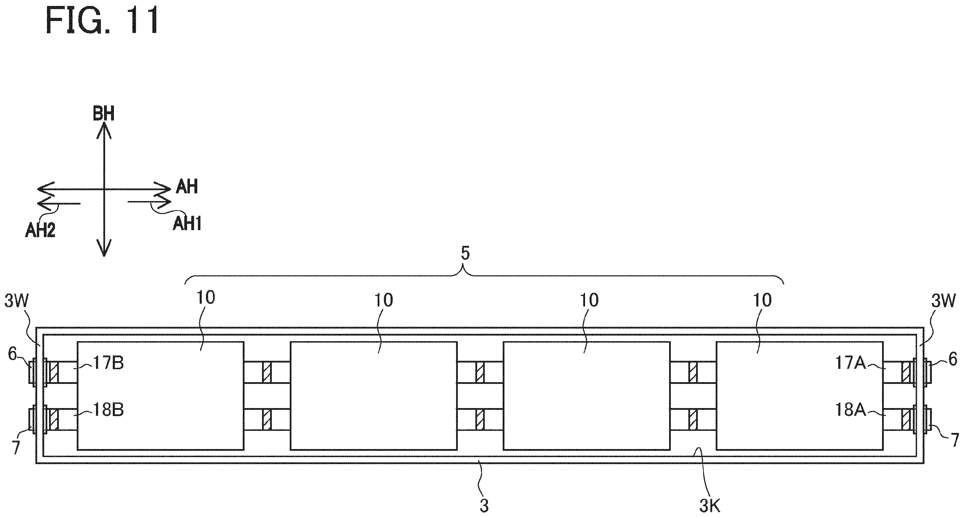

In a housing step S10, the battery group 5 is placed and housed in the container body 3. In a terminal connecting step S11, subsequently, the positive terminal plates 17A and 17B and the negative terminal plates 18A and 18B that are located on both ends of the battery group 5 in the length direction AH and not connected to another battery 10 are directly connected by laser welding to the positive terminal members 6 or the negative terminal members 7 provided on both sides of the container body 3 in the length direction AH. Specifically, for the leftmost battery 10 in FIG. 11, the second positive terminal plate 17B is directly welded to the positive terminal member 6 and the second negative terminal plate 18B is directly welded to the negative terminal member 7 of the container body 3 on the other side AH2 in the length direction AH. For the rightmost battery 10 in FIG. 11, the first positive terminal plate 17A is directly welded to the positive terminal member 6 and the first negative terminal plate 18A is directly welded to the negative terminal member 7 of the container body 3 on the one side AH1 in the length direction AH.

Furthermore, in a container sealing step S12, the lid member 4 is placed on the container body 3 to cover the opening 3K, and the peripheral edge portion of the lid member 4 is laser-welded to the container body 3 over the entire perimeter, forming the hermetically sealed module container 2. Thus, the battery module 1 is completed.

In the first embodiment, as described above, the battery module 1 is manufactured in the procedure of interconnecting the batteries 10 having been subjected to initial charging and sealing to form the battery group 5 in advance, and then placing and housing this battery group 5 in the container body 3 in the housing step S10.

However, another manufacturing procedure may be adopted. For example, multiple uninjected batteries 10 are placed in the container body 3, and connected to each other and also connected to the positive terminal members 6 and the negative terminal members 7 of the container body 3. An electrolyte is then injected into each battery 10 placed in the container body 3. These batteries 10 are initially charged via the positive terminal members 6 and the negative terminal members 7 and then are sealed. Further, after each battery 10 is subjected to the high-temperature aging, the lid member 4 is placed on and welded to the container body 3 over the entire perimeter to seal the module container 2, completing the battery module 1. This procedure may also be adopted.

### First Modified Embodiment

The forgoing first embodiment exemplifies the 4-terminal battery 10 and the battery module 1 using four identical 4-terminal batteries 10 (see FIGs. 1 and 2). In each of these 4-terminal batteries 10, the positive terminal plates 17A and 17B are both provided on the one side BH1 (i.e., the upper side in FIG. 2) in the width direction BH and the negative terminal plates 18A are both provided on the other side BH2 (i.e., the lower side in FIG. 2) in the width direction BH.

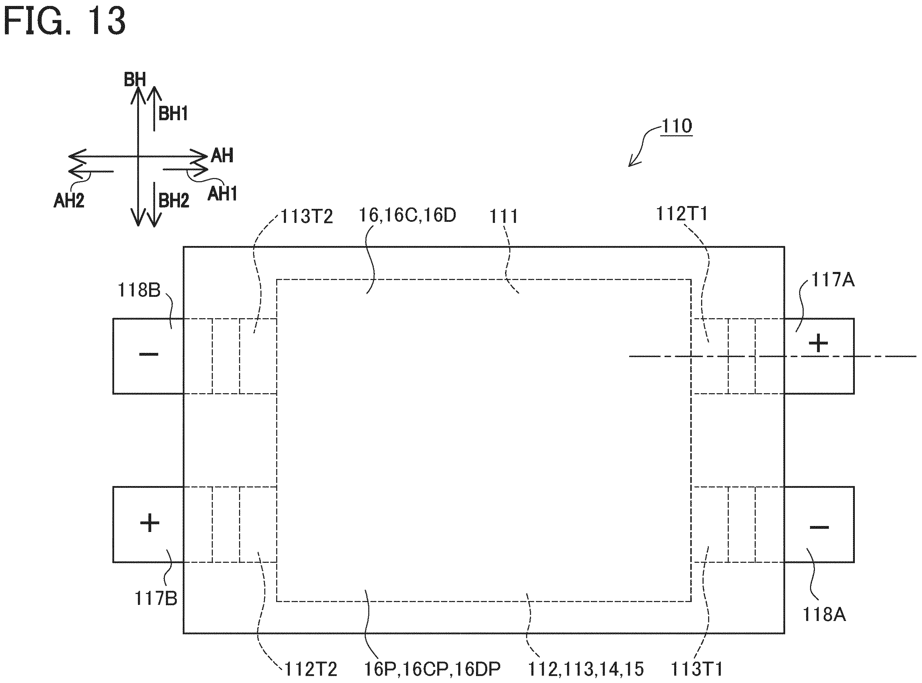

In a first modified embodiment, each of batteries 110 has, similar to the batteries 10, two pairs of terminal plates; a pair of positive terminal plate 117A and negative terminal plate 118A and a pair of positive terminal plate 117B and negative terminal plate 118B. The batteries 110 use the battery cases 16 as with the batteries 10. However, as can be easily understood referring to FIG. 13, in each battery 110, the first positive terminal plate 117A provided on the one side AH1 (the right side in FIG. 13) in the length direction AH is placed on the one side BH1 (the upper side in FIG. 13) in the width direction BH. However, the second positive terminal plate 117B provided on the other side AH2 (the left side in FIG. 13) in the length direction AH is placed on the other side BH2 (the lower side in FIG. 13) in the width direction BH, contrary to the battery 10. Similarly, the first negative terminal plate 118A is placed on the other side BH2 (the lower side in FIG. 13) in the width direction BH, but the second negative terminal plate 118B is placed on the one side BH1 (the upper side in FIG. 13) in the width direction BH. That is, in the batteries 110, the positions of the second positive terminal plates 117B and the second negative terminal plates 118B are reversed from those in the batteries 10.

For achieving the above-described positions of the positive terminal plates 117A and 117B and the positions of the negative terminal plates 118A and 118B, a positive current collecting foil 112F of a positive electrode sheet 112 is configured such that the arrangement of other-side positive electrode tabs 112T2 relative to one-side positive electrode tabs 112T1 is different from that of the positive electrode sheet 12 in the first embodiment, as indicated by broken lines in FIG. 4. Similarly, a negative current collecting foil 113F of a negative electrode sheet 113 is configured such that the arrangement of other-side negative electrode tabs 113T2 relative to one-side negative electrode tabs 113T1 is different from that of the negative electrode sheet 13 in the first embodiment, as indicated by broken lines in FIG. 5. Accordingly, an electrode body 111 consisting of a positive electrode sheet 112, a negative electrode sheet 113, and separators 14 which are wound and flattened is configured such that the one-side positive electrode tabs 112T1 are located facing the first positive terminal plate 117A, the other-side positive electrode tabs 112T2 are located facing the second positive terminal plate 117B, the one-side negative electrode tabs 113T1 are located facing the first negative terminal plate 118A, and the other-side negative electrode tabs 113T2 are placed facing the second negative terminal plate 118B.

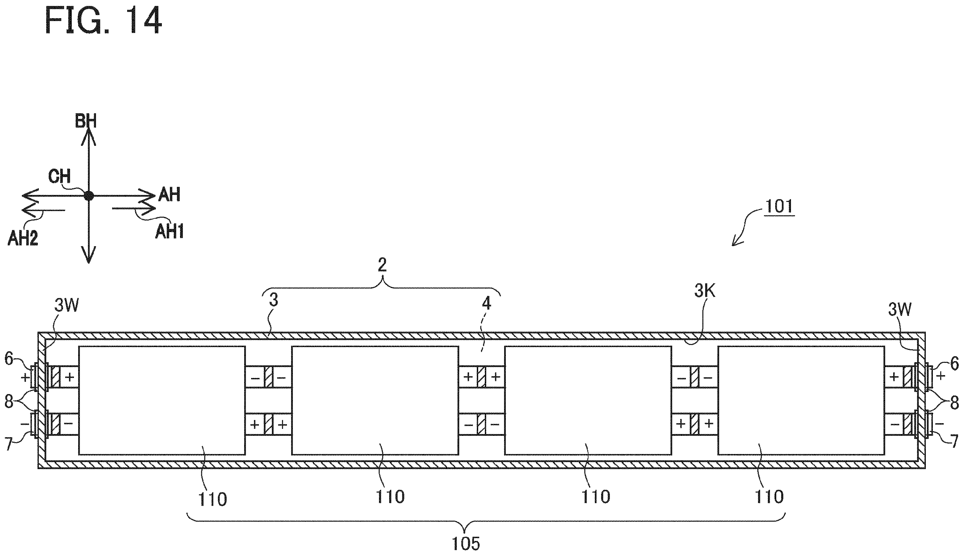

In a battery module 101 in the first modified embodiment, as shown in FIG. 14, a battery group 105 consisting of four batteries 110 interconnected in the cascade arrangement is also housed and hermetically sealed in the module container 2, similar to that in the first embodiment.

In each of the batteries 110 in the first modified embodiment (see FIG. 13), the electrode body 111 and the electrolyte 15 are also accommodated in the battery case 16 made of the liquid-junction preventing resin film, and hermetically sealed. This configuration can prevent the electrolyte 15 from leaking out or penetrating through the battery case 16 to seep out, thus causing liquid junction (ionic short circuit) where the batteries 110 are short-circuited via the electrolyte 15. In addition, the battery case 16 is formed of the liquid-junction preventing resin film less expensive as compared to a laminate film, so that the batteries 110 can be inexpensive and hence the battery module 101 using those batteries 110 can also be inexpensive.

In the battery module 101 in the first modified embodiment, the module container 2 made of aluminum also houses and hermetically seals the batteries 110 constituting the battery group 105. Thus, this battery module 101 prevents intrusion of water or water vapor into the module container 2 and hence into the space around the batteries 110. It is therefore possible to prevent intrusion of water vapor into each battery 110 even using the battery case 16 made of the inexpensive liquid-junction preventing resin film as the exterior package of each battery 110, and hence make the battery module 101 less expensive.

### Second Modified Embodiment

In the battery module 1 of the first embodiment and the battery module 101 of the first modified embodiment, the 4-terminal batteries 10 and 110 are respectively used and the paired positive terminal member 6 and the negative terminal member 7 are provided in each of the wall members 3W located on both sides of the module container 2 in the length direction AH.

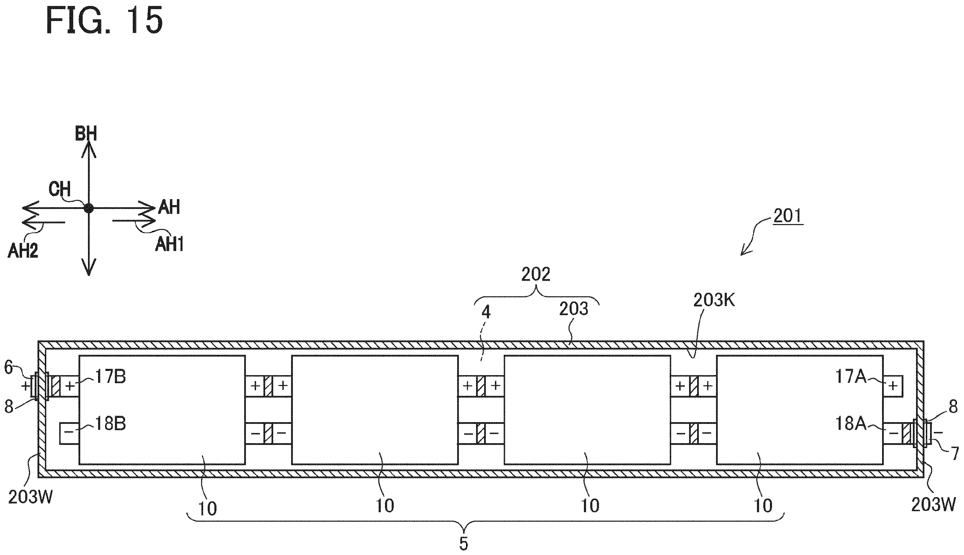

A battery module 201 in a second modified embodiment is identical to the battery module 1 in the first embodiment in using the battery group 5 in which the 4-terminal batteries 10 are connected, as shown in FIG. 15. However, the battery module 201 differs from the battery module 1 in that a wall member 203W of a module container 202 on the one side AH1 (the right side in FIG. 15) in the length direction AH is provided with only the negative terminal member 7, and a wall member 203W on the other side AH2 (the left side in FIG. 15) is provided with only the positive terminal member 6.

However, in the battery module 201 in the second modified embodiment, as in the battery module 1 in the first embodiment, four batteries 10 are electrically connected in parallel between the positive terminal member 6 and the negative terminal member 7. The battery module 201 provided with only one pair of the positive terminal member 6 and the negative terminal member 7 can also be used as a battery module as with the battery module 1.

In the battery module 201 in the second modified embodiment, the module container 202 made of aluminum also prevents intrusion of water or water vapor into the module container 202 and hence into the space around the batteries 10. It is therefore possible to prevent intrusion of water vapor into the batteries 10 even using the battery case 16 made of the inexpensive liquid-junction preventing resin film as the exterior package of each battery 10, and hence make the battery module 201 less expensive.

In the second modified embodiment, the positive terminal member 6 and the negative terminal member 7 are widely separated from each other in the length direction AH. However, the paired positive terminal member 6 and negative terminal member 7 may be provided only in the wall member 203W of the module container 202 on the one side AH1 in the length direction AH. Alternatively, contrary to the above, the paired positive terminal member 6 and negative terminal member 7 may be provided only in the wall member 203W of the module container 202 on the other side AH2 in the length direction AH.

Moreover, among the four batteries 10 constituting the battery group 5, the leftmost battery 10 may be replaced with a 3-terminal battery not equipped with the second negative terminal plate 18B or the rightmost battery 10 may be replaced with a 3-terminal battery not equipped with the first positive terminal plate 17A.

### Third Modified Embodiment

In each of the battery modules 1, 101, and 201 in the first embodiment and the first and second modified embodiments, the battery group 5 or 105 consisting of multiple batteries 10 or 110 arranged in the length direction AH is housed in the module container 2 or 202 of a rectangular prismatic shape long in the length direction AH. The arrangement of the batteries may be changed to other forms.

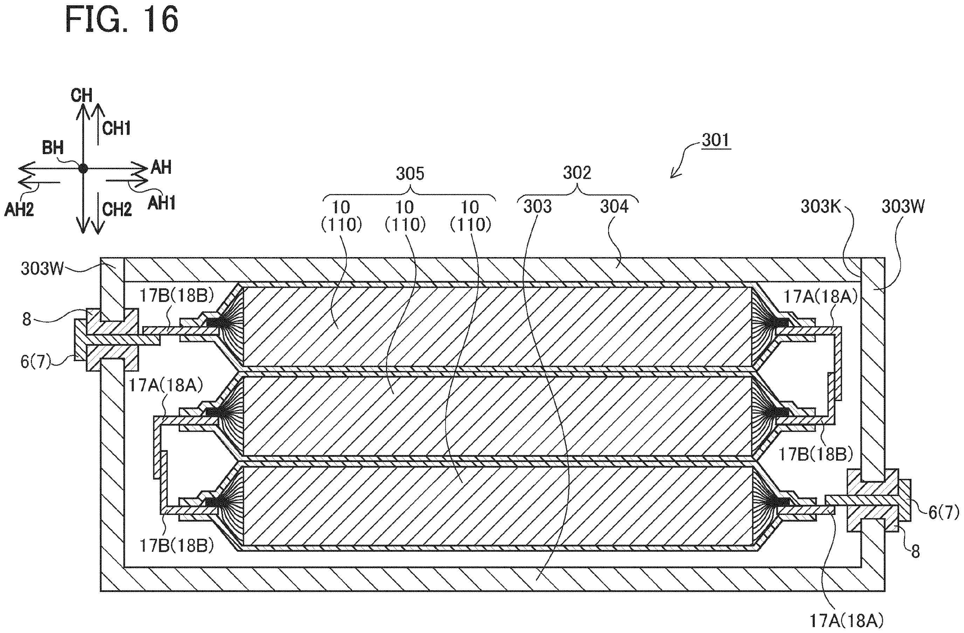

In a battery module 301 in a third modified embodiment, as shown in FIG. 16, multiple (three in the third embodiment) batteries 10 (see FIG. 2) are stacked in the thickness direction CH, and the positive terminal plates 17A and 17B and the negative terminal plates 18A and 18B of each battery 10 are bent at an angle of 90° into a V shape and interconnected by ultrasonic welding to form a battery group 305. As compared to the module container 2 (see FIG. 1) used in the battery module 1 in the first embodiment, a module container 302 used in the third modified embodiment is shorter in the dimension in the length direction AH and larger in the dimension in the thickness direction CH to allow the battery group 305 including three batteries 10 stacked one on another to be housed in the module container 302. As with the module container 2 in the first embodiment, the module container 302 in the third modified embodiment also includes a container body 303 having a bottomed rectangular prismatic shape and a lid member 304 that closes a rectangular opening 303K of the container body 303.

The container body 303 has wall members 303W on both sides in the length direction AH. The wall members 303W are provided with a pair of positive terminal member 6 and negative terminal member 7, which are insulated from the container bodies 303 via the insulation members 8, like the wall members 3W of the container body 3 in the first embodiment. However, in the wall member 303W on one side AH1 (the right side in FIG. 16) in the length direction AH, the paired positive terminal member 6 and negative terminal member 7 are provided at off-center positions to the other side CH2 (the lower side in FIG. 16) in the thickness direction CH. On the other hand, in the wall member 303W on the other side AH2 (the left side in FIG. 16) in the length direction AH, the paired positive terminal member 6 and negative terminal member 7 are provided at off-center positions to the one side CH1 (the upper side in FIG. 16) in the thickness direction CH. This arrangement is for connection with the corresponding batteries 10.

In the battery module 301 in the third modified embodiment, multiple (three in the third modified embodiment) batteries 10 are also electrically connected in parallel, as in the battery module 1 in the first embodiment.

In addition, in the battery module 301 in the third modified embodiment, the module container 302 made of aluminum also prevents intrusion of water or water vapor into the module container 302 and hence into the space around the batteries 10. It is therefore possible to prevent intrusion of water vapor into the batteries 10 even using the battery case 16 made of the inexpensive liquid-junction preventing resin film as the exterior package of each battery 10, and hence make the battery module 301 less expensive.

The third modified embodiment uses the batteries 10 identical to those in the first embodiment, but may use the 4-terminal batteries 110 identical to those in the first modified embodiment instead of the batteries 10.

### Second Embodiment

Each of the first embodiment and the first to third modified embodiments exemplifies the battery module 1, 101, 201, or 301 in which the battery group 5, 105, or 305 consisting of the 4-terminal batteries 10 or 110 electrically interconnected in parallel is housed in the module container 2, 202, or 302.

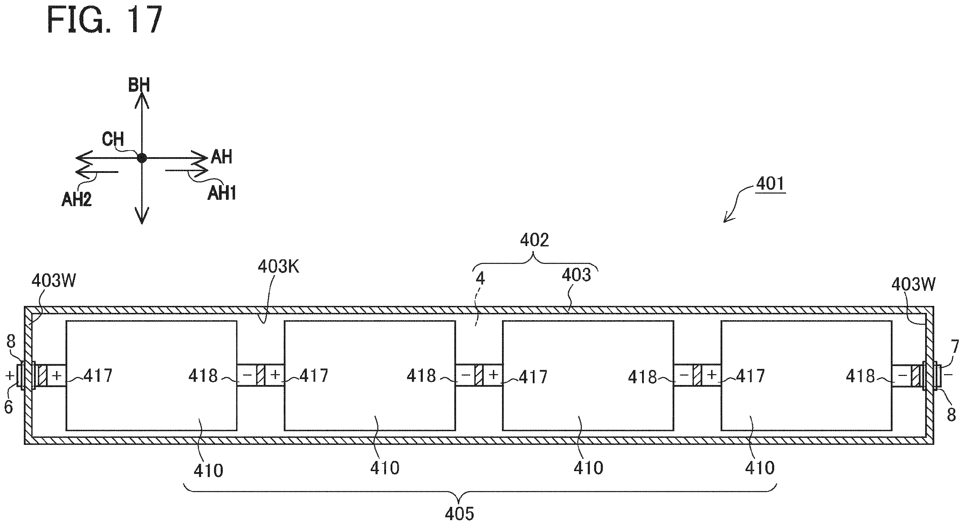

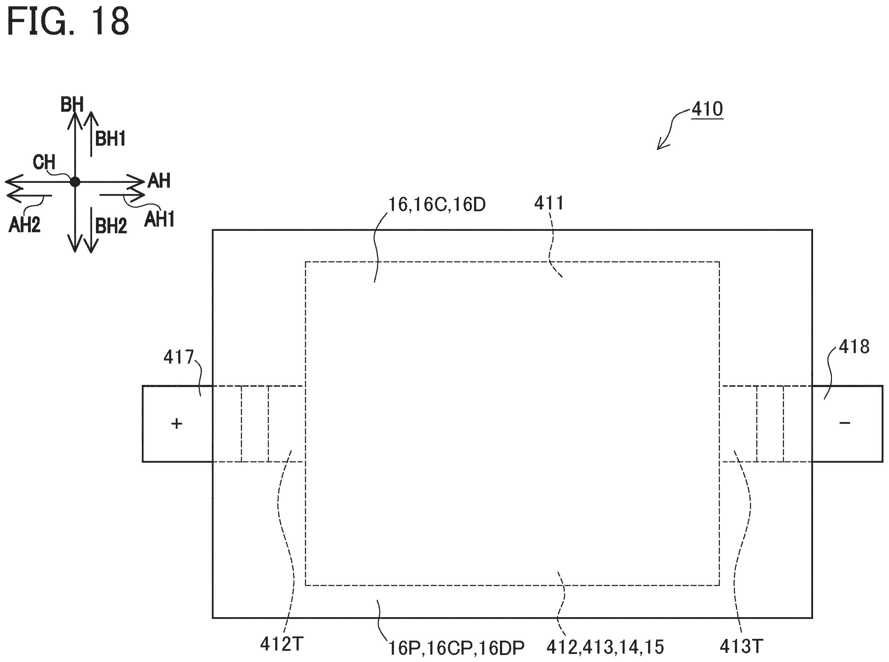

In contrast, different from the above battery modules, a battery module 401 (see FIG. 17) in a second embodiment uses 2-terminal batteries 410 (see FIG. 18) provided with only a pair of positive terminal member 6 and negative terminal member 7, that is, two terminal members in total, and a battery group 405 consisting of multiple (four in the second modified embodiment) batteries 410 electrically connected in series to each other. Accordingly, unlike the module container 2 in the first embodiment, in the module container 402 in the second embodiment, a wall member 403W located on one side AH1 in the length direction AH as a part of a container body 403 is provided with only the negative terminal member 7 via the insulation member 8 and a wall member 403W located on the other side AH2 is provided with only the positive terminal member 6 via the insulation member 8.

Each of the batteries 410 in the second embodiment shown in FIG. 18 includes the battery case 16 identical to that of each battery 10 in the first embodiment. However, each battery 410 is provided with only a negative terminal plate 418 formed of a copper plate on one side AH1 (the right side in FIG. 18) in the length direction AH and only a positive terminal plate 417 made of an aluminum plate on the other side AH2 (the left side in FIG. 18) in the length direction AH.

Although not described in detail, in order to enable the above arrangement of the positive terminal plate 417 and the negative terminal plate 418, a positive electrode sheet 412 constituting an electrode body 411 of each battery 410 is formed with only positive electrode tabs 412T and similarly a negative electrode sheet 413 is formed with only negative electrode tabs 413T. Accordingly, for the electrode body 411 consisting of the positive electrode sheet 412, the negative electrode sheet 413, and the separators 14, which are wound and flattened, a plurality of negative electrode tabs 413T is integrated on one side AH1 (the right side in FIG. 18) in the length direction AH and welded to the negative terminal plate 418. Further, a plurality of positive electrode tabs 412T is integrated on the other side AH2 (the left side in FIG. 18) in the length direction AH and welded to the positive terminal plate 417.

In the second embodiment, four batteries 410 are electrically connected in series by directly connecting the positive terminal plate 417 of one of the batteries 410 that adjacently located to the negative terminal plate 418 of the other battery 410 by ultrasonic welding to constitute the battery group 405.

When an aluminum plate and a copper plate, which are dissimilar metals, are connected by melting respective base metals by e.g. spot welding, brittle intermetallic compounds may be generated in their melted areas, causing fracture at welded portions. However, in the second embodiment, as described above, the positive terminal plate 417 and the negative terminal plate 418, that is, the aluminum plate and the copper plate, are connected by ultrasonic welding, so that the aluminum plate and the copper plate are solid-phase bonded to each other. Consequently, any intermetallic compounds are less likely to form between those plates, resulting in stable connection.

In each battery 410 (see FIG. 18) in the second embodiment, the electrode body 411 and the electrolyte 15 are also accommodated and hermetically sealed in the battery case 16 formed of the liquid-junction preventing resin film. This configuration can prevent liquid junction between the batteries 410. Further, since the battery case 16 is formed of the inexpensive liquid-junction preventing resin film, the batteries 410 can be inexpensive and hence the battery module 401 using those batteries 410 can also be inexpensive.

In the battery module 401 in the second embodiment, the module container 402 made of aluminum also internally houses and hermetically seals the batteries 410 forming the battery group 405. Thus, this battery module 401 prevents water or water vapor from intruding into the module container 402 and hence into the space around the batteries 410. It is therefore possible to prevent intrusion of water vapor into the batteries 410 even using the battery case 16 made of the inexpensive liquid-junction preventing resin film as the exterior package of each battery 410, and hence make the battery module 401 less expensive.

Further, in this battery module 401, four batteries 410 housed therein are connected in series by connecting the positive terminal plate 417 of one of the adjacently located batteries 410 to the negative terminal plate 418 of the other battery 410. This configuration can achieve the inexpensive battery module 401 with a simple structure.

The second embodiment exemplifies the batteries 410 provided with one negative terminal plate 418 on the one side AH1 in the length direction AH and one positive terminal plate 417 on the other side AH2 in the length direction AH. Alternatively, each battery may be provided with two or more negative terminal plates 418 on one side AH1 in the length direction AH and two or more positive terminal plates 417 on the other side AH2 in the length direction AH, and the batteries are connected in series. In this case, those batteries can be interconnected with even lower resistance.

Although the invention is described above in the first and second embodiments and the first to three modified embodiments, the invention is not limited to the above embodiment and others and may be appropriately embodied in other specific forms without departing from the essential characteristics thereof.

### Reference Signs List

- 1, 101, 201,301: Battery module
- 2, 202, 302, 402: Module container (Metal module container)
- 3, 303, 403: Container body
- 3W, 203W, 303W, 403W: Wall member
- 5, 105, 305, 405: Battery group
- 6: Positive terminal member
- 7: Negative terminal member
- 10, 110: 4-terminal battery (Battery)
- 410: 2-terminal battery (Battery)
- 11, 111, 411: Electrode body
- 15: Electrolyte (Non-aqueous electrolyte)
- 16: Battery case
- 16P: Peripheral portion
- 17A: First positive terminal plate (Positive terminal plate, Electrode terminal plate )
- 17B: Second positive terminal plate (Positive terminal plate, Electrode terminal plate )
- 417: Positive terminal plate

## Claims

1. A battery module comprising:
a plurality of batteries (10, 110, 410) each including:
an electrode body (11, 111, 411);
a non-aqueous electrolyte (15);
a battery case (16) made of a liquid-junction preventing film that does not include a metal foil, the battery case (16) accommodating and hermetically sealing the electrode body (11, 111, 411) and the non-aqueous electrolyte (15) to block penetration of the non-aqueous electrolyte (15); and
a plurality of electrode terminal plates (17A, 17B, 417, 18A, 18B, 418) including at least one positive terminal plate (17A, 17B, 417) and at least one negative terminal plate (18A, 18B, 418), each hermetically extending from inside to outside of the battery case (16) through a peripheral portion (16P) of the battery case (16),
the electrode terminal plate (17A, 17B, 417, 18A, 18B, 418) of one of the batteries (10, 110, 410) that are adjacently located being electrically connected to the electrode terminal plate (17A, 17B, 417, 18A, 18B, 418) of the other battery (10, 110, 410); and
a module container (2, 202, 302, 402) made of metal, housing and hermetically sealing the plurality of batteries (10, 110, 410).

2. The battery module (1, 101, 201, 301, 401) according to claim 1, wherein the electrode terminal plates (17A, 17B, 417, 18A, 18B, 418) of the batteries (10, 110, 410) are directly welded to each other.

3. The battery module (401) according to claim 2, wherein
the positive terminal plate (417) is formed of an aluminum plate,
the negative terminal plate (418) is formed of a copper plate, and
the positive terminal plate (417) of the one battery (410) and the negative terminal plate (418) of the other battery (410) are directly connected to each other by ultrasonic welding.

4. The battery module (1, 101, 201, 301) according to any one of claims 1 to 3, wherein
each of the plurality of batteries (10, 110) has four terminal plates (17A, 17B, 18A, 18B) including:
a pair of first positive terminal plate (17A) and first negative terminal plate (18A); and
a pair of second positive terminal plate (17B) and second negative terminal plate (18B), and
the plurality of batteries (10, 110) is connected in parallel with each other in a cascade arrangement, in which the first positive terminal plate (17A) of the one battery (10, 110) is connected to the second positive terminal plate (17B) of the other battery (10, 110) and the first negative terminal plate (18A) of the one battery (10, 110) is connected to the second negative terminal plate (18B) of the other battery (10, 110).

5. The battery module (401) according to any one of claims 1 to 3, wherein the plurality of batteries are directly connected to each other by connection of the at least one positive terminal plate (417) of the one battery (410) to the at least one negative terminal plate (418) of the other battery (410).
